# EUROPÄISCHE PATENTSCHRIFT

(11) **EP 3 947 059 B1**
(45) Veröffentlichungstag und Bekanntmachung des Hinweises auf die Patenterteilung: **17.07.2024**
(21) Anmeldenummer: 20701980.3
(22) Anmeldetag: 23.01.2020
(51) Int. Cl.: B60S 1/52

(54) **SCHEIBENWISCHER**
WINDSCREEN WIPER
ESSUIE-GLACE

(30) Priorität: 01.04.2019 DE 102019204547
(43) Veröffentlichungstag der Anmeldung: 09.02.2022
(73) Patentinhaber: Robert Bosch GmbH, 70442 Stuttgart (DE)
(72) Erfinder: GOELLER, Alexander, 72270 Baiersbronn (DE)
(86) Internationale Anmeldenummer: PCT/EP2020/051580
(87) Internationale Veröffentlichungsnummer: WO 2020/200533

(56) Entgegenhaltungen:
- EP-A1- 3 415 380
- DE-A1- 102004 007 351
- DE-A1- 102015 114 922
- US-A1- 2008 127 441
- US-A1- 2017 066 415

## Beschreibung

Die Erfindung betrifft einen Scheibenwischer nach dem Oberbegriff des Anspruch 1. Stand der Technik dazu ist aus der DE 10 2015 114922 A1, der US 2017/066415 A1, der EP 3 415 380 A1, der US 2008/127441 A1 und der DE 10 2004 007351 A1 bekannt.

Die Erfindung ist im unabhängigen Anspruch 1 definiert.

Weiterbildungen der Erfindung sind in den abhängigen Ansprüchen aufgeführt. Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Es wird erfindungsgemäß vorgeschlagen einen Scheibenwischer bereitzustellen, der ein Wischblatt und ein Wischarm an dem das Wischblatt angebracht wird, umfasst. Der Wischarm ist kappenartig ausgebildet und weist eine Befestigungsstelle für das Wischblatt innerhalb seiner kappenartigen Struktur auf. Innerhalb des Wischarms ist ein Düsenelement angeordnet, welches Flüssigkeit in Richtung der Scheibe neben das Wischblatt spritzt. Der Scheibenwischer reinigt eine Scheibe, auf der das Wischblatt aufliegt. Das Wischblatt kann vorzugsweise mittels eines Adapters an einer Befestigungsstelle angebracht werden. Durch die vorgeschlagene Scheibenwischerausführung wird ein bauraumsparendes Konzept erreicht, welches zudem auf kostengünstige Weise einen Scheibenwischer mit einem Düsenelement für Scheibenwischwasser ausstattet.

Erfindungsgemäß ist auf beiden Seiten neben dem Wischblatt ein Kanalabschnitt des Düsenelements angeordnet, wobei die Kanalabschnitte an einer gemeinsamen Zuführung angeschlossen sind. Hierdurch wird unmittelbar in Wischrichtung vor und/oder hinter das Wischblatt Flüssigkeit auf eine Scheibe appliziert.

Es kann ein Düsenelement aus wenigstens zwei Teilen zusammengesetzt werden, wobei wenigstens ein Teil perforiert ist und wasserdicht mit dem zweiten Teil verbunden ist. Es kann geklebt und/oder geschweißt werden. Es kann ein ultraschall- und/oder ein Laserschweißverfahren verwendet werden und/oder durch einen erhitzten Stempel verprägt werden.

In dem Düsenelement ist ein Kanal ausgebildet, durch den die Flüssigkeit geleitet wird. Die Perforation in dem Düsenelement mündet in dem Kanal, sodass die Flüssigkeit aus dem Kanal durch die Perforation austreten kann. Der Kanal umfasst wenigstens einen Kanalabschnitt, der durch zwei zusammengesetzte Teile gebildet wird.

Die Perforation ist durch Löcher ausgebildet, die insbesondere in unterschiedliche Richtungen weisen, sodass sich Flüssigkeit, die durch die Löcher nach außen in richtung Scheibe tritt, in voneinader divergierenden Spritzstrahlen manifestiert. Die Spritzstrahlen treffen dann auf der Scheibe an unteschiedlichen Orten entlang der Länge des Wischblatts auf. Die Löcher können durch Kanäle gebildet werden, die in unterschiedliche Richtungen ausgerichtet sind, sodass die Spritzstrahlen divergieren. Alternativ können die Spritzstahlen durch Kugeldüsen in unterschiedlich Richtungen gelenkt werden.

Der Kanalabschnitt kann durch einen halbschalenförmigen Teil gebildet werden, auf den ein plattenförmiger Teil vorzugsweise durch ein Ultraschallverfahren angeschweißt ist. Der plattenförmige Teil kann die Perforation enthalten. Dadurch wird ein einfach gestalteter Kanal bereitgestellt.

Das Düsenelement kann auf einer dem Wischblatt zugewandten Seite abgeflacht sein. Dadurch wird ein überstehen des Düsenelements in Richtung des Wischblatts aus dem inneren des Wischarms vermieden.

Besonders bevorzugt kann das Düsenelement bündig mit einem unteren Rand des Wischarms angeordnet sein. Es steht somit in Richtung des Wischblatts nicht vom Rand ab und kann seitlich zwischen dem Rand und dem Düsenelement einen Spalt so füllen, dass das Düsenelement vorzugsweise am Rand anliegt.

Nach der Erfindung ist wenigstens ein Abschnitt des Düsenelements u-förmig oder o-förmig. Das Düsenelement kann insgesamt u-förmig oder o-förmig sein.

Nach der Erfindung umgibt das Düsenelement die Befestigungsstelle für das Wischblatt, sodass die Befestigungsstelle von außen zugänglich ist. Solch ein Düsenelement umläuft die Befestigungsstelle. Insbesondere u- oder o-förmige Düsenelemente könne die Befestigungsstelle wenigstens teilweise umringen. Damit Flüssigkeit vorteilhaft zu dem Düsenelement herangeführt werden kann, kann die Zuführung in etwa mittig an dem Düsenelement angeordnet sein.

Weitere vorteilhafte Ausgestaltungen der Erfindung sind in den Unteransprüchen und der folgenden Figurenbeschreibung offenbart. Es zeigen:
Fig. 1A ein o-förmiges Düsenelement, welches in einem Wischarm eingesetzt ist,
Fig. 1B ein u-förmiges Düsenelement, welches in einem Wischarm eingesetzt ist,
Fig. 2A eine Explosionszeichnung eines zweiteiligen o-förmigen Düsenelements,
Fig. 2B eine Explosionszeichnung eines zweiteiligen u-förmigen Düsenelements, und
Fig. 3 Wischarm mit einer Aussparung für einen Schlauch am Rand.

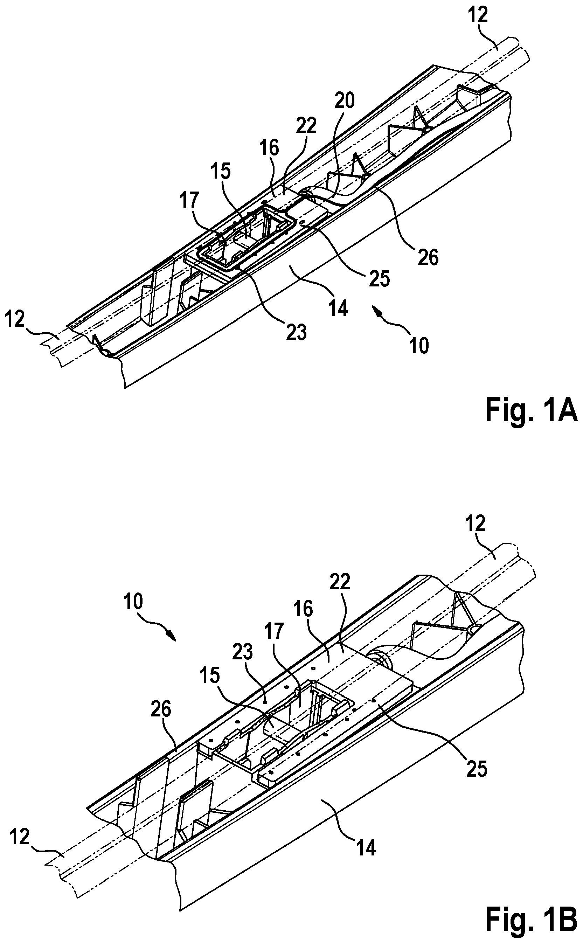

Figur 1A zeigt eine Unterseite eines Scheibenwischers 10. Der Scheibenwischer 10 umfasst ein Wischblatt 12, welches an einem Wischarm 14 angebracht ist. Dabei ist das Wischblatt 12 an einer Befestigungsstelle 15 befestigt, wobei vorzugsweise ein Adapter hierfür am Wischblatt 12 vorgesehen ist. Der Scheibenwischer 10 wischt über eine Scheibe, auf der das Wischblatt 12 aufliegt und durch eine Wischbewegung die Scheibe reinigt. Das Wischblatt 12 erstreckt sich entlang des Wischarms 14.

Der Wischarm 14 ist kappenartig durch ein nach unten in Richtung der Scheibe bzw. des Wischblatts 12 geöffneten vorzugsweise Spritzgussteils gebildet. In dem Wischarm 12 ist die Befestigungsstelle 15 angeordnet und durch die Öffnung des Wischarm 14 zugänglich. Die Öffnung ist durch einen Rand 26 umringt, der die freistehende Kante in Richtung Wischblatt 12 darstellt.

In dem Wischarm 14 ist ein Düsenelement 16 angeordnet, welches eine Aufnahme 17 umfasst, in die die Befestigungsstelle 15 angeordnet wird. Das Düsenelement 16 ist bündig mit dem Rand 26 des Wischarms 14, sodass das Düsenelement 16 nicht über den Rand 26 in Richtung Wischblatt 12 absteht. Dabei ist ein Teil 22, der eine Perforation 23 aufweist, in Richtung Wischblatt 12 gerichtet, sodass die Flüssigkeit durch die Perforation 23 bezüglich der Wischbewegungsrichtung vor und neben das Wischblatt 12 gespritzt wird.

Das Düsenelement 16 der Figur 1A weist einen Abschnitt 25 auf, der o-förmig ist. Der Abschnitt 25 umringt die Aufnahme 17 für die Befestigungsstelle 15. Dabei ist ein Teil der Perforation vor und ein Teil hinter der Befestigungsstelle 15 positioniert, wobei zwischen diesen beiden Teilen eine Zuführung 20 für die Flüssigkeit an dem Düsenelement 16 angebracht ist. Die Zuführung 20 erstreckt sich in Längsrichtung des Wischarms 14 und ist an einem Schlauch 30 angeschlossen.

Die Perforation 23 ist durch Löcher in einer Reihe entlang der Längsrichtung des Wischarms 14 angeordnet. Die beiden die Perforation 23 tragenden Teile des o-förmigen Abschnitts 25 erstrecken sich entlang der Längsrichtung des Wischblatts. Der Adapter des Wischblatts 12 wird durch die Aufnahme 17 des Düsenelements 16 gesteckt, sodass der Adapter durch das Düsenelement umringt ist.

Figur 1B zeigt ein Wischarm 14 bei dem ein u-förmiges Düsenelement 16 eingebaut ist. Die Aufnahme 17 ist durch das u-förmige Düsenelement 16 umfasst. Die beiden langestreckten die Perforation tragenden Teile des u-förmigen Abschnitts 25 bilden eine gabelförmige Struktur, deren freie Enden in Längsrichtung des Wischarms gerichtet sind. Die Befestigungsstelle 15 ist nicht ganz umringt von dem Düsenelement.

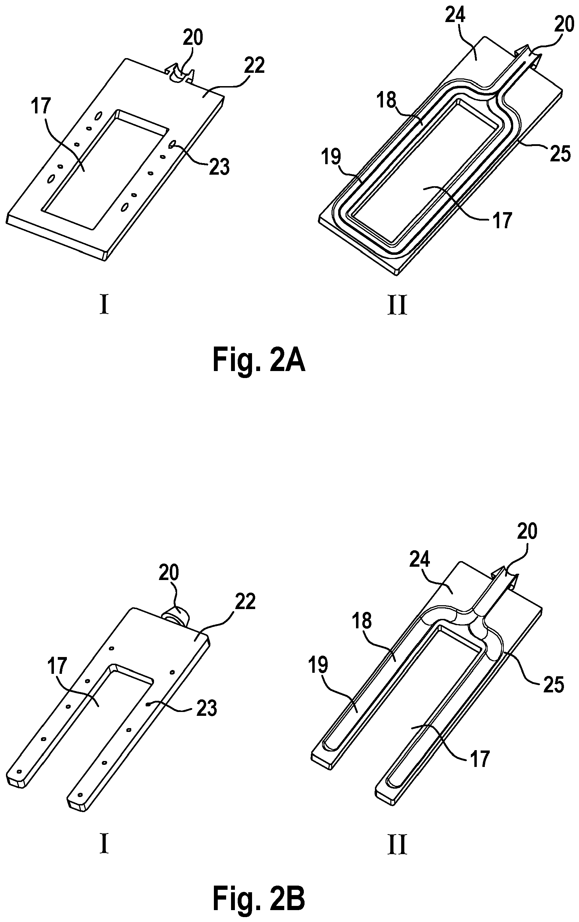

Figur 2A zeigt ein o-förmiges Düsenelement 16, welches aus zwei Teilen 22, 24 zusammengebaut werden kann. Das erste Teil 23 in Figur 2AI ist plattenförmig und weist ebenfalls die o-Form auf. Es beinhaltet die Perforation 23. Das konturmäßig deckungsgleiche zweite Teil 24 beinhaltet einen Kanal 19, der einen Kanalabschnitt 18 aufweist, der ebenfalls o-förmig ist und an die Zuführung 20 angeschlossen ist. Das erste Teil 22 wird auf das zweite Teil 24 aufgelegt und festgeschweißt.

Figur 2B zeigt ein gleich wie in Figur 2A zusammengesetztes Düsenelement 16, wobei es u-förmig ist und eine gabelförmige Struktur aufweist.

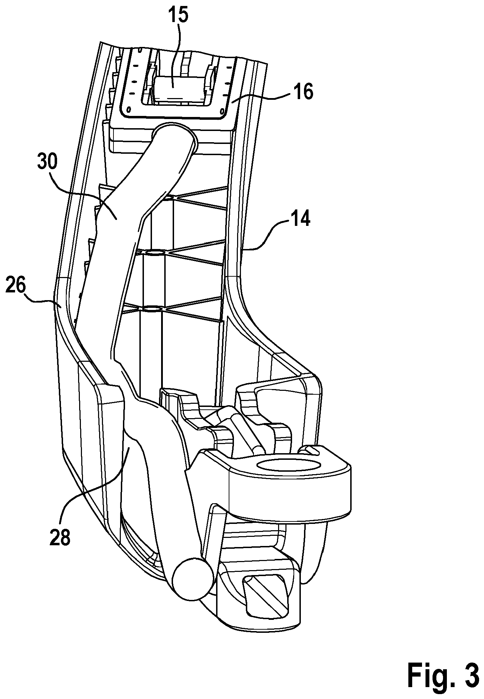

Figur 3 zeigt einen Gelenkabschnitt des Wischarms 14, der an einen Drehpunkt der Scheibenwischeranlage angebracht wird. Im Bereich des Gelenkabschnitts, der an einem axialen Ende des Wischarms angebracht ist, ist eine Aussparung 28 ausgeformt, durch die der Schlauch 30 des Düsenelements 16 hindurchgeführt werden kann. Die Aussparung 28 ist in dem Rand 26 ausgeformt und in Richtung Wischblatt geöffnet. Durch die Aussparung 28 wird der Schlauch aus dem Wischarm geführt.

## Patentansprüche

1. Scheibenwischer (10) umfassend ein Wischblatt (12) und ein Wischarm (14) an dem das Wischblatt (12) angebracht wird, wobei der Wischarm (14) kappenartig ausgebildet ist und wenigstens eine Befestigungsstelle (15) für das Wischblatt (12) innerhalb seiner kappenartigen Struktur aufweist, wobei innerhalb des Wischarms (14) ein Düsenelement (16) angeordnet ist, welches in Richtung Wischblatt (12) Flüssigkeit neben das Wischblatt (12) spritzt und die Befestigungsstelle (15) wenigstens teilweise umgibt, wobei wenigstens ein Abschnitt (25) des Düsenelements (16) u-förmig oder o-förmig ist, **dadurch gekennzeichnet, dass** auf beiden Seiten neben dem Wischblatt (12) ein Kanalabschnitt (18) des Düsenelements (16) angeordnet ist, wobei die Kanalabschnitte (18) an einer gemeinsamen Zuführung (20) angeschlossen sind und wenigstens ein Kanalabschnitt (18) durch zwei zusammengesetzte Teile (22, 24) gebildet ist.

2. Scheibenwischer (10) nach Anspruch 1 oder 2, **dadurch gekennzeichnet, dass** Düsenelement aus wenigstens zwei Teilen zusammengesetzt ist, wobei wenigstens ein Teil (22) perforiert ist und wasserdicht mit dem zweiten Teil (24) verbunden ist.

3. Scheibenwischer (10) nach einem der vorhergehenden Ansprüche, **dadurch gekennzeichnet, dass** das Düsenelement (16) auf einer dem Wischblatt zugewandten Seite abgeflacht ist.

4. Scheibenwischer (10) nach einem der vorhergehenden Ansprüche, **dadurch gekennzeichnet, dass** die Zuführung (20) in etwa mittig an dem Düsenelement (16) angeordnet ist.

5. Scheibenwischer (10) nach einem der vorhergehenden Ansprüche, **dadurch gekennzeichnet, dass** das Düsenelement (16) bündig mit einem unteren Rand (26) des Wischarms (14) angeordnet ist.

6. Scheibenwischer (10) nach einem der vorhergehenden Ansprüche, **dadurch gekennzeichnet, dass** das Düsenelement (16) einen halbschalenförmigen Teil aufweise, auf den ein plattenförmiger Teil vorzugsweise durch ein Ultraschallverfahren angeschweißt ist.

7. Scheibenwischer (10) nach einem der vorhergehenden Ansprüche, **dadurch gekennzeichnet, dass** das Düsenelement (16) eine Befestigungsstelle (15) für das Wischblatt (12) umgibt, sodass die Befestigungsstelle (15) von außen zugänglich ist.

## Claims

1. Windscreen wiper (10) comprising a wiper blade (12) and a wiper arm (14) on which the wiper blade (12) is mounted, wherein the wiper arm (14) has a cap-like design and has at least one fastening point (15) for the wiper blade (12) within its cap-like structure, wherein there is arranged within the wiper arm (14) a nozzle element (16) which sprays liquid next to the wiper blade (12), in the direction of the wiper blade (12), and which at least partially surrounds the fastening point (15), wherein at least a portion (25) of the nozzle element (16) is U-shaped or O-shaped, **characterized in that** a channel portion (18) of the nozzle element (16) is arranged on both sides next to the wiper blade (12), wherein the channel portions (18) are connected to a common feed (20), and at least one channel portion (18) is formed by two parts (22, 24) joined together.

2. Windscreen wiper (10) according to Claim 1 or 2, **characterized in that** the nozzle element is composed of at least two parts, wherein at least one part (22) is perforated and is connected to the second part (24) in a water-tight manner.

3. Windscreen wiper (10) according to one of the preceding claims, **characterized in that** the nozzle element (16) is flattened on a side facing the wiper blade.

4. Windscreen wiper (10) according to one of the preceding claims, **characterized in that** the feed (20) is arranged approximately centrally on the nozzle element (16) .

5. Windscreen wiper (10) according to one of the preceding claims, **characterized in that** the nozzle element (16) is arranged flush with a lower edge (26) of the wiper arm (14).

6. Windscreen wiper (10) according to one of the preceding claims, **characterized in that** the nozzle element (16) has a half-shell-shaped part, to which a plate-shaped part is welded, preferably by an ultrasonic process.

7. Windscreen wiper (10) according to one of the preceding claims, **characterized in that** the nozzle element (16) surrounds a fastening point (15) for the wiper blade (12), such that the fastening point (15) is accessible from the outside.

## Revendications

1. Essuie-glace (10) comprenant un balai d'essuie-glace (12) et un bras d'essuie-glace (14) sur lequel le balai d'essuie-glace (12) est monté, le bras d'essuie-glace (14) étant réalisé en forme de capuchon et présentant au moins un emplacement de fixation (15) pour le balai d'essuie-glace (12) à l'intérieur de sa structure en forme de capuchon, un élément de buse (16) étant agencé à l'intérieur du bras d'essuie-glace (14), lequel injecte du liquide à côté du balai d'essuie-glace (12) en direction du balai d'essuie-glace (12) et entoure au moins partiellement l'emplacement de fixation (15), au moins une section (25) de l'élément de buse (16) étant en forme de U ou en forme de O, **caractérisé en ce qu'**une section de canal (18) de l'élément de buse (16) est agencée des deux côtés à côté du balai d'essuie-glace (12), les sections de canal (18) étant raccordées à une alimentation commune (20) et au moins une section de canal (18) étant formée par deux parties assemblées (22, 24) .

2. Essuie-glace (10) selon la revendication 1 ou 2, **caractérisé en ce que** l'élément de buse est composé d'au moins deux parties, dont au moins une partie (22) est perforée et reliée de manière étanche à l'eau à la deuxième partie (24).

3. Essuie-glace (10) selon l'une quelconque des revendications précédentes, **caractérisé en ce que** l'élément de buse (16) est aplati sur un côté tourné vers le balai d'essuie-glace.

4. Essuie-glace (10) selon l'une quelconque des revendications précédentes, **caractérisé en ce que** l'alimentation (20) est agencée approximativement au centre de l'élément de buse (16).

5. Essuie-glace (10) selon l'une quelconque des revendications précédentes, **caractérisé en ce que** l'élément de buse (16) est agencé à fleur d'un bord inférieur (26) du bras d'essuie-glace (14).

6. Essuie-glace (10) selon l'une quelconque des revendications précédentes, **caractérisé en ce que** l'élément de buse (16) présente une partie en forme de demi-coque sur laquelle une partie en forme de plaque est soudée, de préférence par un procédé à ultrasons.

7. Essuie-glace (10) selon l'une quelconque des revendications précédentes, **caractérisé en ce que** l'élément de buse (16) entoure un emplacement de fixation (15) pour le balai d'essuie-glace (12), de telle sorte que l'emplacement de fixation (15) est accessible depuis l'extérieur.
